# EUROPÄISCHE PATENTSCHRIFT

(11) **EP 2 268 986 B1**
(45) Veröffentlichungstag und Bekanntmachung des Hinweises auf die Patenterteilung: **31.10.2012**
(21) Anmeldenummer: 09718571.4
(22) Anmeldetag: 09.03.2009
(51) Int. Cl.: F25D 23/06

(54) **KÄLTEGERÄT MIT MINDESTENS EINEM ANGERITZTEN VERSCHALUNGSELEMENT**
REFRIGERATOR COMPRISING AT LEAST ONE SLIGHTLY SLIT CASING ELEMENT
RÉFRIGÉRATEUR AYANT AU MOINS UN ÉLÉMENT EN COFFRE À FENTES

(30) Priorität: 10.03.2008 DE 102008013444
(43) Veröffentlichungstag der Anmeldung: 05.01.2011
(73) Patentinhaber: BSH Bosch und Siemens Hausgeräte GmbH, 81739 München (DE)
(72) Erfinder: SCHMIDT, Rudolf, 89537 Giengen (DE)
(86) Internationale Anmeldenummer: PCT/EP2009/052709
(87) Internationale Veröffentlichungsnummer: WO 2009/112450

(56) Entgegenhaltungen:
- DE-B- 1 279 698
- DE-U1-202005 019 502
- FR-A- 2 097 072
- GB-A- 1 275 744
- US-A- 5 344 065

## Beschreibung

Die Erfindung betrifft ein Kältegerät mit mindestens einem Innenbehälter und mindestens einem außen angebrachten Verschalungselement, zwischen denen ein Hohlraum mit einem wärmedämmenden Isolationsmaterial angefüllt ist. Ein solches Gerät ist z.B. aus der GB-A-1 275744 bekannt.

Bei der Herstellung eines Kältegeräts wie z.B. eines Kühlschranks, Gefriergeräts, Kühl-/Gefrierkombinationsgeräts, wird üblicherweise eine Pappe bzw. ein Karton an der Rückwand und/oder Oberseite dessen Innenbehälters als Verschalungselement zusammen mit einer oder mehreren Gehäuseteilen wie z.B. Seitenwänden, Rahmenprofilelementen, usw. derart angebracht, dass zwischen der Pappe und dem Innenbehälter ein Hohlraum gebildet ist. Dieser Hohlraum wird mit dem flüssigen Vorläufer eines aufschäumenden, wärmedämmenden Isolationsmaterials gefüllt. Nach Expansion und Aushärten dieses Isolationsmaterials ist zwischen der Innenwand der Pappe bzw. des Kartons und der Außenwand des Innenbehälters eine wärmedämmende Isolationsmaterialschicht gebildet. Um den Karton hinsichtlich seiner Geometrieform an die Außenkontur des Innenbehälters, zusätzlicher Gehäuseteile, Außenrahmenteile, usw. anpassen zu können, wird die Pappe bzw. der Karton entlang einer oder mehrerer Soll-Biegelinien gefaltet. Diese Faltung der Pappe bzw. des Kartons in eine bestimmte, gewünschte Geometrieform kann in der Praxis aufgrund der Materialsteifigkeit des Pappenmaterials bzw. Kartonmaterials erschwert sein. Insbesondere kann das Widerstandsmoment der jeweiligen Pappe bzw. des Kartons gegen dessen Verformung so groß sein, dass die Pappe bzw. der Karton nach seiner Verformung bzw. Faltung wieder in seine ursprüngliche, planflächige Ausgangsgeometrieform zurückstellt, was unerwünscht ist. Bisherige Maßnahmen zur Unterstützung der Formgebung des jeweiligen Kartons bzw. der jeweiligen Pappe, wie z.B. Vorfalten der Pappe teilweise oder ganz von Hand oder mit Hilfe einer Faltanlage, Rillen oder Einschneiden des Kartons entlang des Gesamtverlaufs der jeweilig gewünschten Soll-Biegelinie, sind unter einer Vielzahl von Gegebenheiten ungenügend, zu aufwendig, und/oder mit einer etwaigen Beschädigung der Diffusionssperrfolie des Kartons verbunden.

Die Offenlegungsschrift GB 1 275 744 zeigt einen doppelwandigen Kühlschrank, wobei zwischen den beiden Wänden ein Isolierschaum eingebracht ist.

Die Gebrauchsmusterschrift DE 20 2005 019 502 U1 zeigt eine Verpackung für fließfähige Lebensmittelfette oder Öle bestehend aus einer Außenverpackung aus Karton und einer mit der Außenverpackung verklebten Innenverpackung aus Kunststofffolie.

Der Erfindung liegt die Aufgabe zugrunde, ein Kältegerät, insbesondere Haushalts-Kältegeräts, mit mindestens einem Innenbehälter und mindestens einem außen angebrachten Verschalungselement bereitzustellen, das in eine gewünschte Geometrieform leicht faltbar ist und in dieser Geometrieform nach der Faltung weitgehend formstabil verbleibt. Gemäß der Erfindung wird diese Aufgabe durch die Merkmale des Anspruchs 1 gelöst.

Dadurch, dass das Verschalungselement entlang der jeweiligen Soll-Biegelinie mit einer Vielzahl von Anritzungen in vorgegebenen Längsabständen versehen ist, die mit dazwischenliegenden, verbleibenden Stegen des Verschalungselements abwechseln, wird zum einen eine verbesserte Faltbarkeit des Verschalungselements in eine gewünschte Geometrieform erreicht. Zum anderen verbleibt das Verschalungselement nach dem Faltungsvorgang in einer ihm aufgeprägten Geometrieform aber auch noch ausreichend formstabil. Dies bedeutet, dass es weder zu einer unzulässig großen Rückfederbewegung bzw. Rückstellbewegung des jeweilig umgefalteten Teils des Verschalungselements, noch zu einem unzulässig großen Verlust der Eigensteifigkeit des Verschalungselements im Bereich der jeweiligen Soll-Biegelinie kommt. Da die Anritzungen lediglich in vorgegebenen Längsabständen voneinander mit dazwischen verbleibenden Stegen des Verschalungselements im Bereich der jeweilig gewünschten Soll-Biegelinie vorgesehen sind, ist entlang dieser Soll-Biegelinie eine Art Falzscharnier bereitgestellt, dessen jeweilig umgefaltetes Teil in der ihm zugeordneten Falzposition im wesentlichen selbstarretierend stehen bleibt.

Gemäß einer ersten zweckmäßigen Weiterbildung der Erfindung sind die Anritzungen vorzugsweise linienförmig ausgebildet. Dies hat insbesondere den Vorteil, dass das Verschalungselement in der Art einer Stichnaht entlang einer gewünschten Soll-Biegelinie mit den linienförmigen Anritzungen versehen werden kann, wodurch ein kontrolliertes Wegklappen eines Falzteils ermöglicht und gleichzeitig in jeder Falzposition des Falzteils eine Lageselbstsicherung des Falzteils durch die verbleibenden Zwischenstege bewirkt ist. Die Zwischenstege in den Lücken zwischen den linienförmigen Anritzungen bilden dabei über den Gesamtverlauf der jeweiligen Soll-Biegelinie betrachtet insbesondere eine Art linienförmiges Längsscharnier, das an den Stellen der linienförmigen Anritzungen unterbrochen ist.

Alternativ können die Anritzungen ggf. auch punktförmig ausgebildet sein oder eine sonstige Geometrieform aufweisen, die sich quer zur Soll-Biegelinie nur begrenzt ausdehnt.

Gemäß der Erfindung sind die Anritzungen lediglich auf derjenigen Seite des Verschalungselemlents angebracht, die dessen Diffusionssperrschicht abgewandt liegt. Dadurch wird weitgehend vermieden, dass die Diffusionssperrschicht, insbesondere Diffusionssperrfolie bzw. - Beschichtung, verletzt oder gar durchtrennt wird. Auf diese Weise ist ein ausreichender Erhalt der Diffusionssperrwirkung der Diffusionssperrfolie- bzw. Beschichtung des Verschalungselements trotz der Vielzahl von Anritzungen sichergestellt.

Gemäß einer weiteren zweckmäßigen Weiterbildung der Erfindung ist das Verhältnis der Anzahl von Anritzungen zur Anzahl der verbleibenden Stege derart gewählt ist, dass das Verschalungselement entlang der jeweiligen Soll-Biegelinie weitgehend formstabil umfalzbar ist. Insbesondere ist das Verhältnis von Anritzlänge zur Steglänge der entlang der jeweiligen Soll-Biegelinie alternierend aufeinanderfolgenden Anritzungen und Stegen derart gewählt ist, dass das Verschalungselement entlang der Soll-Biegekante weitgehend formstabil umfalzbar ist, d.h., dass sich eine ausreichende Faltbarkeit des Verschalungselements bei gleichzeitiger Formstabilität des jeweilig umgefalteten Falzteils des Verschalungselements ergibt. Dadurch ist in vorteilhafter Weise ein Zurückfedern des jeweilig umgefalteten Falzteils des Verschalungselements in seine Ausgangslage vermieden. Durch die Formstabilität bleibt das umgefaltete Teil im Wesentlichen in der ihm aufgeprägten Position selbsttragend stehen. Es ist also weitgehend vermieden, dass das umgefaltete Verschalungselement ohne Halt in sich zusammenfällt. Auf diese Weise kann die Vormontage des umgefalteten Verschalungselements am Innenbehälter des Kältegeräts, insbesondere Haushaltsgeräts, in einfacher und zuverlässiger Weise durchgeführt werden.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: schematisch in räumlicher Darstellung ein erstes Ausführungsbeispiel eines Verschalungselements, das nach dem erfindungsgemäßen Konstruktionsprinzip in eine bestimmte Geometrieform umgefaltet ist,
- Figur 2: schematisch in perspektivischer Darstellung ein Haushalts-Kältegerät mit dem anmontierten, vorgefalteten Verschalungselement von Figur 1,
- Figur 3: in schematischer Darstellung mehrere Anritzungen entlang einer Soll-Biegelinie des Verschalungselements der Figuren 1, 2 als vergrößerte Einzelheit,
- Figur 4: schematisch im Querschnitt das Verschalungselement von Figur 2 im Bereich einer hinteren Eckkante des Innenbehälters des Haushalts-Kältegeräts von Figur 2,
- Figur 5: in schematischer Darstellung eine einzelne Anritzung im Verschalungselement der Figur 1 mit 4 bei einem Schnitt quer zur Längserstreckung einer gewünschten Soll-Biegelinie betrachtet.

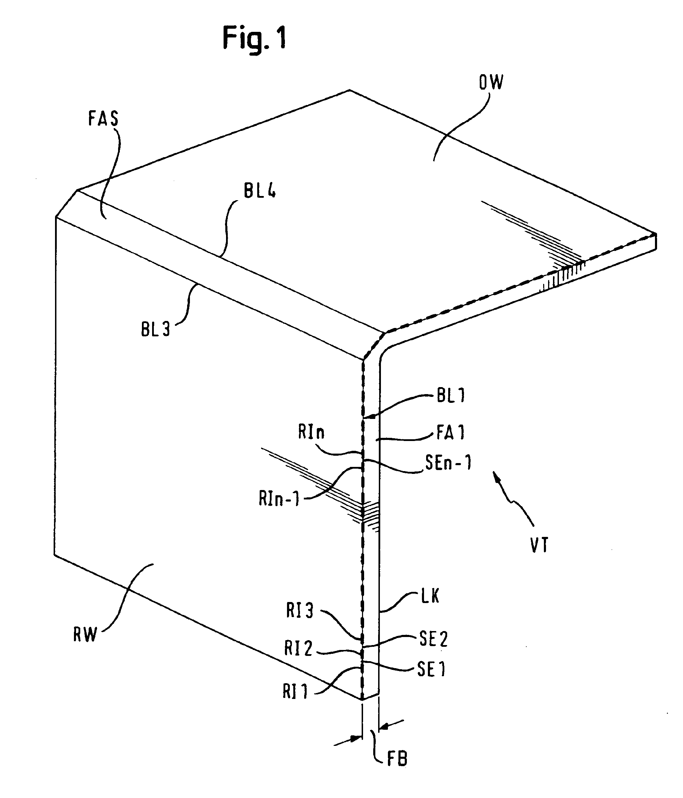

Elemente mit gleicher Funktion und Wirkungsweise sind in den Figuren 1 mit 5 jeweils mit denselben Bezugszeichen versehen.

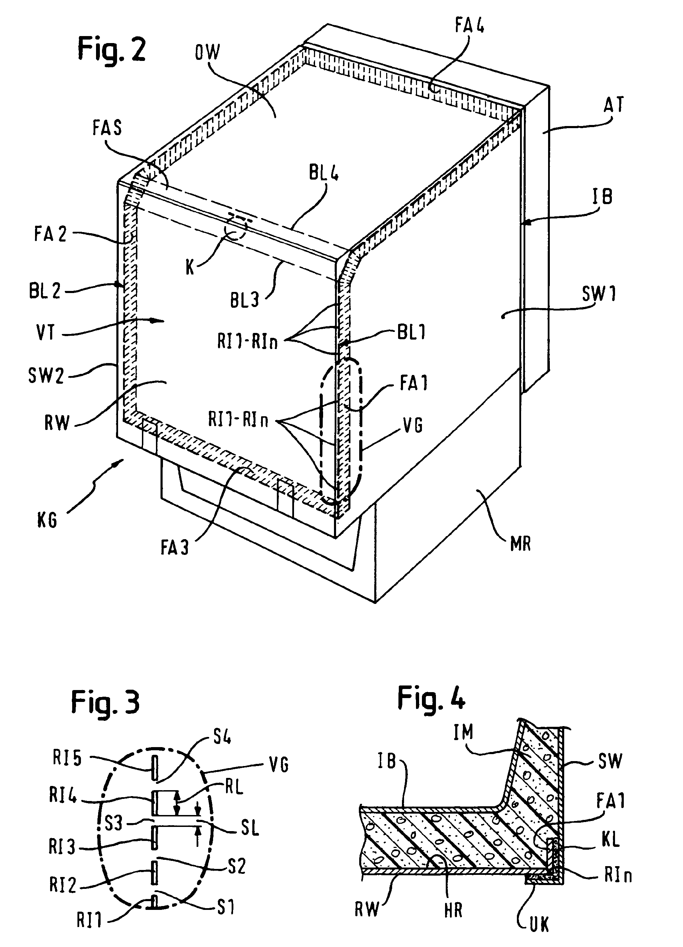

Figur 1 zeigt schematisch in perspektivischer Darstellung als Einzelheit ein Verschalungselement VT, das aus seinem ursprünglich planflächigen Zustand vorab durch Umfaltungen bzw. Falzungen in eine gewünschte, gefaltete Verschalungs-Geometrieform umgeformt worden ist. Mit dieser Verschalungs-Geometrieform ist das Verschalungselement VT mit ein oder mehreren Gehäuseteilen, wie z.B. Innenbehälter, Längsseitenwänden, Rahmenprofilelementen, usw...., des Korpus eines Haushalts-Kältegeräts KG zusammengefügt. Figur 2 zeigt in schematischer sowie räumlicher Darstellung dieses Haushalts-Kältegerät KG mit dem anmontierten Verschalungselement VT von Figur 1. Es ist zwischen zwei seitlich angeordneten Gehäusewänden SW1, SW2 des Korpus des Haushalts-Kältegeräts KG in einem vorgebbaren Höhenabstand zu den Außenwänden des Innenbehälters IB als Rückwand und als Deckenwand derart angeordnet, dass zwischen seiner Innenwand und der Außenwand des Innenbehälters IB ein Hohlraum HR gebildet ist. In diesem Hohlraum HR wird ein flüssiger Vorläufer eines aufschäumenden, wärmedämmenden Isolationsmaterials eingefüllt. Nach Aufschäumen und Aushärten des flüssig eingebrachten Isolationsmaterials bildet sich zwischen dem Verschalungselement VT und dem Innenbehälter IB eine wärmedämmende Isolationsmateriaischicht IM aus.

Hier im Ausführungsbeispiel weist das Verschalungselement VT die Geometrieform eines U-Profils auf, bei dem ein Schenkel weggelassen worden ist. Mit anderen Worten ausgedrückt, ist das Verschalungselement VT bei Blickrichtung von seiner Längsseitenwand SW1 aus betrachtet bezogen auf seine Rückwand RW als Bezugsebene annäherungsweise L-förmig ausgebildet. Es setzt sich aus der vertikal verlaufenden Rückwand RW und einer um etwa 90° dazu abgewinkelten Deckenwand OW einteilig zusammen. Die Übergangszone zwischen seiner Rückwand RW und seiner Deckenwand OW ist dabei durch eine schräge Fläche bzw. Fasung FAS gebildet. Dazu verlaufen zwei Soll-Biegelinien BL3, BL4 in einem vorgebbaren Querabstand voneinander im Wesentlichen parallel zur unteren sowie zur oberen Stirnseite des Verschalungselements VT im Bereich der Mitte der Längserstreckung des Verschalungselements. Innerhalb der Schrägfläche dieser Fasung FAS ist eine Einführklappe K vorgesehen, die eine Einführöffnung für eine Lanzette freigibt, um das aufschäumende Isolationsmaterial IM in den Hohlraum HR einzufüllen.

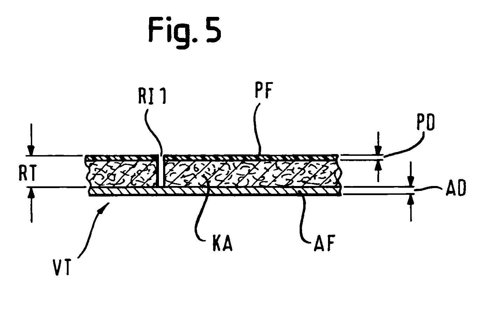

Als Ausgangsbauteil zum Formen des Verschalungselement ist vorzugsweise eine weitgehend planflächige Karton- bzw. Pappenplatte wie z.B. KA (siehe Figur 5) vorgesehen. Auf ihrer Innenseite ist das Verschalungselement mit mindestens einer Diffusionssperrschicht, insbesondere Diffusionssperrfolie, beschichtet, insbesondere kaschiert oder laminiert. Insbesondere weist die Kartonplatte hier im Ausführungsbeispiel an ihrer Innenwand eine Aluminiumfolie bzw. Aluminiumschicht AF als Diffusionssperre, insbesondere Wasserdampfsperre, auf. Auf ihrer Außenwand sitzt mindestens eine PE (Polyethylen)-Folie oder -Beschichtung PF auf. Beim Verschalungselement VT von Figur 5 ist also außenseitig eine PE-Folie PF und innenseitig eine Aluminiumfolie AF auflaminiert.

Das Verschalungselement VT weist entlang seinen Längskanten im Bereich der Oberkante sowie der Hinterkante der jeweiligen Gehäuse-Längsseiten SW1 bzw. SW2 jeweils einen Falzstreifen FA1 bzw. FA2 auf, der um etwa 90° gegenüber der planen Lageebene der Rückwand RW sowie der Deckenwand OW umgelegt ist. Das Verschalungselement VT weist also im Bereich seiner jeweiligen Längs Außenkante eine zu dieser im Querabstand nach innen versetzte Soll-Biegelinie BL1 bzw. BL1* auf. Der gegenüber dieser Soll-Biegelinie BL1 bzw. BL2 lateral überstehende Randlängsstreifen des Verschalungselements VT ist um etwa 90° aus der planen Lageebene der Rückwand RW und der Deckenwand OW heraus umgebogen, insbesondere umgebörtelt. Das Verschalungselement VT weist somit entlang seiner jeweiligen Längs Außenkante einen Falzstreifen FA1 bzw. FA2 auf, der im Wesentlichen in einer zur jeweiligen Gehäuselängsseitenwand SW1, SW2 parallelen Lageebene verläuft. Mit dem jeweiligen Falzstreifen FA1 bzw. FA2 kontaktiert das Verschalungselement VT die Innenwand der jeweiligen Längsseitenwand SW1, SW2 in einer Randzone entlang deren Oberkante sowie Hinterkante.

Ggf. kann das Verschalungselement VT auch im Bereich seiner Oberkante und/oder Unterkante in entsprechender Weise einen derartigen Falzstreifen FA4 bzw. FA3 aufweisen.

Durch den umgelegten bzw. umgeknickten Falzstreifen wie z.B. FA1, FA2 am jeweiligen Außenrand des Verschalungselements VT kann dieses weitgehend schaumdicht in Kontakt mit den verschiedenen Gehäuseteilen, wie hier z.B. den Gehäuse-Längsseitenwänden SW1, SW2, des Korpus des Haushalts-Kältegeräts KG gebracht werden. Um eine möglichst zuverlässige Abdichtung gegen Schaumaustritt sicherstellen zu können, kann es insbesondere zweckmäßig sein, das Verschalungselement VT entlang seines jeweilig umgelegten Falzstreifens wie z.B. FA1, FA2 durch mindestens eine Adhäsionsverbindung und/oder mechanische Verbindung mit dem jeweilig zugeordneten Gehäuseteil des Korpus des Haushalts-Kältegeräts KG zu verbinden. Selbstverständlich kann auch jede andere Art von Koppelung zwischen dem Verschalungselement VT und dem übrigen Gehäuseteilen des Korpus des Haushalts-Kältegeräts KG zweckmäßig sein, um einen möglichst hermetisch abgeschlossenen Hohlraum HR zwischen der Innenwand des Verschalungselements VT, der Außenwand des Innenbehälters IB, sowie den sonstigen Gehäuseteilen wie z.B. den Seitenwänden SW1, SW2 bereitstellen zu können. So kann das Verschalungselement VT beispielsweise an seiner Oberkante und/oder Unterkante auch durch eine Steckverbindung oder Klemmverbindung mit Gehäuseteilen des Korpus gekoppelt sein.

Das Verschalungselement VT (siehe z.B. Figur 1) weist hier im Ausführungsbeispiel entlang der jeweilig gewünschten Soll-Biegelinie wie z.B. BL1 eine Vielzahl von linienförmigen Anritzungen bzw. Einstiche wie z.B. RI1 mit RIn auf, die in vorgegebenen Längsabständen voneinander mit verbleibenden Stegen SE1 mit SEn-1 entlang der Soll-Biegelinie alternierend angeordnet sind. Je zwei benachbarte Anritzungen wie z.B. RI1, RI2 weisen also zwischen sich ein verbleibendes Stegelement wie z.B. SE1 auf. Die Vielzahl von linienförmigen Anritzungen bzw. Einstiche RI1 mit RIn verlaufen somit entlang der gewünschten Soll-Biegelinie BL1 in der Art einer unterbrochenen Naht. Mit anderen Worten ausgedrückt, heißt das, dass je zwei benachbarte Anritzungen jeweils durch ein Stegelement unterbrochen sind. Die Anritzungen RI1 mit RIn folgen also stichnahtartig in vorgegebenen Längsabständen entlang der gewünschte Soll-Biegelinie BL1 auf Lücke gesetzt aufeinander. Die Anzahl der Anritzungen, die Anzahl der dazwischen liegenden Stege sowie insbesondere das Verhältnis von Anritzlänge zur Steglänge der entlang der Soll-Biegelinie alternierend aufeinanderfolgenden Anritzungen und Stege ist vorzugsweise derart gewählt, dass das Verschalungselement entlang der Soll-Biegelinie weitgehend formstabil umfalzbar ist. Dies bedeutet, dass ein Falzteil des Verschalungselements entlang der jeweiligen Soll-Biegelinie in eine gewünschte Lageebene bzw. Position umfalzbar bzw. umbiegbar ist und gleichzeitig dieses umgelegte Falzteil in dieser ihm zugeordneten Lageebene bzw. Position von sich aus stehen bleibt. Denn durch die gestrichelte Linie der hintereinander gesetzten Anritzungen wie z.B. RI1 mit RIn entlang der jeweilig gewünschten Soll-Biegelinie wie z.B. BL1 wird lediglich an den Ortspositionen der einzelnen Anritzungsstriche und nicht dazwischen das Material des Verschalungselements eingestochen bzw. eingeschnitten und hinsichtlich seiner Wandstärke bzw. Wanddicke reduziert, so dass eine ausreichende Flexibilität zur Umfaltung bzw. Umwalzung des umzulegenden Falzteils weitgehend sichergestellt ist. Durch die Vielzahl von Einstichen ist also das Widerstandmoment des Verschalungselements beim Falzen oder Falten gegenüber einem vollflächigen, unbearbeiteten Verschalungselement reduziert. In der Figur 1 ist beispielsweise ein Randstreifen FA1 (bei Blickrichtung von der Rückseite her) entlang der rechten, rückseitigen Längskante des Verschalungselements VT um etwa 90° gegenüber der vertikal verlaufenden Lageebene der Rückwand RW und Deckenwand OW herumgeklappt. Selbstverständlich ist es auch möglich, zwischen der Rückwand RW bzw. Deckenwand OW und dem Falzstreifen FA1 einen anderen Abknickwinkel einzustellen. Gleichzeitig ist durch die verbleibenden Längsstege wie z.B. SE1 mit SEn-1 in den Zwischenräumen zwischen den hintereinander auf Lücke gesetzten, linienförmigen Anritzungen z.B. RI1 mit RIn eine ausreichende Materialsteifigkeit derart sichergestellt, dass das jeweilige umgefaltete Teil wie z.B. hier der Falzstreifen FA1 in seiner ihm zugeordneten Falzposition stehen bleibt. Auf diese Weise ist eine Art selbst- arretierendes bzw. selbstsicherndes Falzscharnier zwischen dem jeweilig umgefalteten bzw. umgebörtelten Falzteil des Verschalungselements und dessen Restfläche bildet. Im Gegensatz dazu würde bei einer entlang der Gesamtlänge der Soll- Biegelinie ganz durchgehenden Ritzlinie zwar eine höhere Faltbarkeit des jeweilig zu faltenden Teils des Verschalungselements hergestellt sein, jedoch würde dieses Teil nach seiner Falzung nicht in seiner ihm zugewiesenen Falzposition von sich aus stehen bleiben. In diesem Fall würde die Formstabilität des umgeformten Schalungselements verloren gehen. Im anderen Extremfall, dass entlang der gewünschten Soll-Biegelinie lediglich eine Rillung, d.h. ein Zusammenpressen des Materials des Verschalungselements vorgesehen ist, wären hingegen die Rückstellkräfte des Verschalungselements zu hoch, so dass das jeweilig abgeknickte Falzteil in seine ursprüngliche Ausgangslage aufgrund der zu großen Materialsteifigkeit entlang der gewünschten Soll-Biegelinie zurückfedern würde. Darüber hinaus wäre dabei der Kraftaufwand zum Umbiegen bzw. zum Umlegen des Falzteils in der Praxis zu groß.

Figur 3 zeigt schematisch in vergrößerter Darstellung als Einzelheit mehrere linienförmige Anritzungen RI1 mit RI5 in einem strichpunktiert angedeuteten Teilabschnitt VG entlang der Soll-Biegelinie BL1 von Figur 2. Zwischen den in einer Linie hintereinander durch Lücken beabstandete linienförmigen Anritzungen RI1 mit RI5 bleiben die Stege SE1 mit SE4 des Verschalungselements VT in dessen ursprünglicher Wandstärke bzw. Wanddicke stehen. Hier im Ausführungsbeispiel von Figur 3 weisen alle Anritzungen RI1 mit RI5 im Wesentlichen dieselbe axiale Länge RL entlang dem Längsverlauf der gewünschten Soll-Biegelinie BL1 auf. Für die Stege SE1 mit SE4 in den Zwischenräumen der auf Lücke hintereinander gesetzten Anritzungen RI1 mit RI 5 ist im wesentlichen dieselbe Steglänge SL gewählt. Das Verhältnis von Anritzlänge RL zur Steglänge SL wird entlang der Soll-Biegelinie BL1 der alternierend aufeinanderfolgenden Anritzungen RI1 mit RIn und Stege SE1 mit SE1-n ist vorzugsweise derart gewählt, dass das Verschalungselement VT entlang der Soll-Biegelinie BL1 weitgehend formstabil umfalzbar ist. Das Verhältnis von Anritzlänge RL zur Steglänge SL ist vorzugsweise zwischen 1 und 6, insbesondere zwischen 2 und 4 gewählt. Vorzugsweise ist für die Anritzungen RI1 mit RIn jeweils eine Anritzlänge RL zwischen 2mm und 30 mm, insbesondere zwischen 8 mm und 16 mm, gewählt. Die Steglänge des jeweiligen Steges SE1 mit SEn-1 ist vorzugsweise zwischen 1 mm und 10 mm, insbesondere zwischen 1 mm und 5 mm gewählt. Zweckmäßigerweise kann die Anritzlänge RL der jeweiligen Anritzung RI mit Rln größer, insbesondere 4 bis 8 mal größer, als die Steglänge SL des jeweiligen Steges SE1 mit SEn-1 gewählt sein.

Das Verschalungselement VT umfasst eine Karton- bzw. Pappeschicht KA, die auf ihrer Innenseite mit mindestens einer Diffusionssperrschicht, insbesondere Diffusionssperrfolie, beschichtet, insbesondere kaschiert oder laminiert, ist. Figur 5 veranschaulicht anhand eines schematischen Querschnitts im Bereich der Anritzung RI1 quer, insbesondere senkrecht, zur Biegelinie BL1 betrachtet den Schichtaufbau des Verschalungselements VT. Dessen Kartonschicht KA weist an seiner Innenwand eine Aluminiumfolie bzw. Aluminiumschicht AF als Diffusionssperre, insbesondere Wasserdampfsperre, auf. Auf seiner Außenwand sitzt mindestens eine PE (Polyethylen)-Folie oder -Beschichtung auf. Beim Verschalungselement VT von Figur 5 ist also außenseitig eine PE-Folie und innenseitig eine Aluminiumfolie auflaminiert. Die jeweilige Anritzung wie z.B. hier RI1 ist senkrecht zur glattflächigen PE-Außenwand des Verschalungselements VT betrachtet derart tiefenbegrenzt eingeschnitten, dass die diffusionssperrende Wirkung der Aluminiumfolie bzw. -Beschichtung AF weitgehend erhalten bleibt. Mit anderen Worten ausgedrückt, heißt das, dass die jeweilige Anritzung wie hier z.B. RI1 von der PE-folienbeschichteten Außenseite der Kartonschicht KA her höchstens bis zu einer Tiefe RT im Bereich der Lageebene der Außenseite der Aluminiumfolie AF erreicht ist. Die Ritztiefe RT der jeweiligen Anritzung bzw. Einritzung wie Z.B. RI1 ist also hinsichtlich der Tiefe derart begrenzt, dass die Aluminiumfolie bzw. Aluminiumschicht AF weitgehend unbeschädigt bleibt. Die Schichtdicke AD der Aluminiumfolie bzw. Aluminiumschicht ist vorzugsweise zwischen 5 µm und 20 µm, insbesondere zwischen 9 µm und 12 µm, gewählt. Die Schichtdicke PD der PE-Folie bzw. -Beschichtung ist vorzugsweise zwischen 0,01 und 0,1 mm, insbesondere zwischen 20 µm und 50 µm gewählt.

Umfangreiche Tests haben ergeben, dass sich das jeweilig zu faltende Falzteil umso leichter umlegen lässt, je kürzer die Steglänge SL gegenüber der Ritzlänge RL gewählt ist. Für den praktischen Einsatz können insbesondere folgende Abmessungskonstellationen vorteilhaft sein:
1. Alle 10 mm ist eine Anritzung entlang der jeweiligen gewünschten Soll-Biegelinie vorgesehen. Die Ritzlänge RL ist dabei insbesondere um etwa 8 mm gewählt. Die Steglänge SL ist um 2 mm gewählt. Dabei zeigt der Kartonverbund von Figur 5 eine leichte Faltbarkeit um die derart spezifisch ausgebildete Soll-Biegelinie; er bleibt aber weitgehend formstabil stehen.
2. Die Ritzlänge RL ist vorzugsweise um etwa 5 mm gewählt, während die Steglänge SL etwa 2mm beträgt. Dann ergibt sich für den Materialverbundaufbau des Verschalungselements VT von Figur 5 eine etwas schwerere Faltbarkeit bei gleichzeitig verbesserter Formstabilität des gefalteten Verschalungselements.
3. Bei einer Ritzlänge RL von 8mm und einer Steglänge SL von 8 mm zeigt sich eine etwas verschlechterte Faltbarkeit bei guter Formstabilität des umgefalteten Schalungselements.

Figur 4 zeigt bei einem Schnitt quer zum Innenbehälter IB des Haushalts-Kältegeräts KG von Figur 2, d.h. in einer Schnittebene parallel zur etwa horizontal ausgerichteten, im wesentlichen planflächigen Deckenwand OW schematisch den Hohlkörper HR zwischen dem Innenbehälter IB und der Gehäuse-Längsseitenwand SW1 im Bereich des hinteren Falzstreifens FA1, der um etwa 90° gegenüber der Lageebene der Rückwand RW sowie Deckenwand OW nach vorne auf die Tür AT des Haushalts-Kältegeräts KG umgeklappt ist. Die Gehäuse-Längsseitenwand SW1 weist einen um etwa 90° gegenüber ihrer Lageebene in Richtung auf die Rückwand RW zu umgebogenen Schenkel UK auf. Der Schenkel UK verläuft also im Wesentlichen parallel zur Lageebene der Rückwand RW. Im Eckbereich zwischen dem Schenkel UK und der Gehäuse-Längsseitenwand SW1 können insbesondere Adhäsionsmittel, insbesondere ein doppelseitig klebendes Klebeband oder sonstiges Klebemittel, vorgesehen sein. Dies ist in der Figur 4 mit KL bezeichnet. In der Schnittebene von Figur 4 ist ferner die Anritzung RIn an der äußeren Eckkante zwischen dem Falzteil FA1 und der Rückwand RW sichtbar.

Auf diese Weise ist ein Verschalungselement, insbesondere eine Rückwandpappe, bereitgestellt, die sich einfach von Hand und direkt an einer Montagelinie für die Fertigung von Kältegeräten, insbesondere Haushalts-Kältegräten ohne Vorfaltung falten, insbesondere falzen oder umbördeln lässt. Dabei wird durch die Kombination von vorzugsweise länglichen, insbesondere linienförmigen Anritzungen, die lediglich auf Lücke, d.h. mit einem Längsabstand hintereinander gesetzt sind, und den in den Lücken zwischen den Anritzungen stehen bleibenden Materialteilen des Verschalungselements dennoch eine ausreichende Materialsteifigkeit entlang der jeweiligen Soll-Biegelinie beibehalten, so dass das fertig umgefaltete Verschalungselement weitgehend formstabil, insbesondere stehen bleibt. Die Anritzungen sind vorzugsweise derart in das Material des Verschalungselements eingebracht, dass sie nicht vollständig von der Außenseite zur Innenseite des Verschalungselements hindurchdurchgehen, sondern eine Diffusionssperrschicht, die auf der der Anritzung abgewandten Seite des Verschalungselements vorgesehen ist, weitgehend undurchbrochen lassen. Die jeweilige Diffusionssperrschicht, insbesondere -Folie bzw. - Beschichtung, bleibt also weitgehend vollständig erhalten und weist keine Durchbruchsstellen auf. Dadurch kann in vorteilhafter Weise sichergestellt werden, dass trotz Falze, Anritzungen bzw. Einschnitte im Material des Verschalungselements durch dessen Diffusionssperrschicht eine Wasserdampfdiffusion kleiner als der Grenzwert nach Norm ASTM F 1249-01 von 0,2 g/(Tag m²) eingehalten werden kann.

Bei einem Verschalungselement, das eine Pappe bzw. eine Kartonschicht umfasst, die auf ihrer Außenseite mit einer PE- Folie kaschiert ist und die auf ihrer Innenseite mit einer Aluminiumfolie als Diffusionssperre beschichtet ist, sind die Anritzungen zweckmäßigerweise von der PE-Folienseite her in die Kartonschicht eingebracht. Diese Anritzungen reichen nur derart tief in die Kartonschicht hinein, dass die Aluminiumfolie bzw. - Beschichtung auf der Innenseite nicht oder nur teilweise, insbesondere mit höchstens ca. 10% ihrer Schichtdicke, vom jeweiligen Ritz durchdrungen ist. Die bei Tests erreichten Messwerte für die Wasserdampfdiffusion lagen insbesondere bei Werten kleiner 0,010 kg/(Tag m²). Die Abstände der Anritzungen zeigten bei Werten von 2mm Steglänge und 9mm Ritzlänge von allen Versuchen die besten Montageeigenschaften hinsichtlich Falzbarkeit und Formbeständigkeit.

Zusammenfassend betrachtet ergeben sich insbesondere folgende Vorteile für ein erfindungsgemäß angeritztes Verschalungselement:
- Einhaltung der Grenzwerte der Wasserdampfdiffusion von kleiner 0,2 g/(Tag x m²);
- Keine aufwendige Vorfaltung des Verschalungselements von Hand oder in Faltanlagen mehr erforderlich;
- durch den Wegfall der Vorfaltung von Hand oder mittels Formwerkzeuge ergibt sich eine Einsparung von Personal und Kosten in der Vormontage;
- durch Veränderung der Abstände, mit denen jeweiliger Anritz und jeweiliger Steg aufeinanderfolgen, bzw. Anritzlänge und Steglänge sind die jeweilig geforderten Falzeigenschaften bei unterschiedlichen Verschalungselementen, insbesondere verschiedenen Materialstärken und Werkstoffen des Verschalungselements, bei gleichzeitigem Erhalt der Formstabilität des umgeformten bzw. umgefalteten Verschalungselements einstellbar.

## Patentansprüche

1. Kältegerät (KG), insbesondere Haushalts-Käftegerät, mit mindestens einem Innenbehälter (IB) und mindestens einem außen angebrachten Verschalungselement (VT), zwischen denen ein Hohlraum (HR) mit einem wärmedämmenden Isolationsmaterial (IN) angefüllt ist, **dadurch gekennzeichnet, dass** das Verschalungselement (VT) entlang mindestens einer Soll-Biegelinie (BL1) mit einer Vielzahl von Anritzungen (RI1 mit RIn) versehen ist, die in vorgegebenen Längsabständen (SL) voneinander alternierend mit verbleibenden Stegen (SE1 mit SEn-1) des Verschalungselements (VT) angeordnet sind, dass das Verschalungselement (VT) mindestens eine Kartonschicht (KA) aufweist, auf deren Innenseite mindestens eine Diffusionssperrschicht und auf deren Außenseite mindestens eine Polyethylen-Folie oder Polyethylen-Beschichtung (PF) aufgebracht ist, und dass die Anritzungen lediglich auf der der Diffusionssperrschicht abgewandten Seite des Verschalungselements (VT) angebracht sind.

2. Kältegerät nach Anspruch 1, **dadurch gekennzeichnet, dass** die jeweilige Anritzung (RI1) im Wesentlichen linienförmig ausgebildet ist.

3. Kältegerät nach einem der vorhergehenden Ansprüche, **dadurch gekennzeichnet, dass** das Verhältnis der Anzahl von Anritzungen (RI1 mit Rln) zur Anzahl der verbleibenden Stege (SE1 mit SEn-1) derart gewählt ist, dass das Verschalungselement (VT) entlang der jeweiligen Soll-Biegelinie (BL1) weitgehend formstabil umfalzbar ist.

4. Kältegerät nach einem der vorhergehenden Ansprüche, **dadurch gekennzeichnet, dass** das Verhältnis von Anritzlänge (RL) zur Steglänge (SL) der entlang der jeweiligen Soll-Biegelinie (BL1) alternierend aufeinanderfolgenden Anritzungen (RI1 mit RIn) und Stegen (SE1 mit SEn-1) derart gewählt ist, dass das Verschalungselement (VT) entlang der Soll-Biegekante (BL1) weitgehend formstabil umfalzbar ist.

5. Kältegerät nach einem der vorhergehenden Ansprüche, **dadurch gekennzeichnet, dass** das Verhältnis von Anritzlänge (RL) zur Steglänge (SL) der alternierend entlang der Soll-Biegelinie (BL1) aufeinanderfolgenden Anritzungen und Stege zwischen 1 und 6, insbesondere zwischen 2 und 4 gewählt ist.

6. Kältegerät nach einem der vorhergehenden Ansprüche, **dadurch gekennzeichnet, dass** die Anritzlänge (RL) der jeweiligen Anritzung (RI1) zwischen 2 und 30 mm, insbesondere zwischen 8 und 16 mm, gewählt ist.

7. Kältegerät nach einem der vorhergehenden Ansprüche, **dadurch gekennzeichnet, dass** die Steglänge (SL) des jeweiligen Steges (SE1) zwischen 1 und 10 mm, insbesondere zwischen 1 und 5 mm, gewählt ist.

8. Kältegerät nach einem der vorhergehenden Ansprüche, **dadurch gekennzeichnet, dass** die Anritzlänge (RL) der jeweiligen Anritzung (RI1) größer, insbesondere 4 bis 8 Mal größer, als die Steglänge (SL) des jeweiligen Steges (SE1) gewählt ist.

9. Kältegerät nach einem der vorhergehenden Ansprüche, **dadurch gekennzeichnet, dass** die Diffusionssperrschicht eine Diffusionssperr-Folie oder -Beschichtung (AF) ist.

10. Kältegerät nach Anspruch 9, **dadurch gekennzeichnet, dass** die Kartonschicht (KA) auf ihrer dem wärmedämmenden Isolationsmaterial (IM) zugewandten Innenseite mit mindestens einer Aluminium-Folie (AF) als Diffusionssperrschicht beschichtet ist.

11. Kältegerät nach einem der Ansprüche 9 oder 10, **dadurch gekennzeichnet, dass** die jeweilige Anritzung (RI1) derart tiefenbegrenzt ist, dass die Diffusionssperrschicht (AF) der Kartonschicht (KA) weitgehend erhalten bleibt.

12. Kältegerät nach Anspruch 11, **dadurch gekennzeichnet, dass** die jeweilige Anritzung (RI1) von der PE- folienbeschichteten Außenseite der Kartonschicht (KA) her höchstens bis zu einer Tiefe (RT) vorgesehen ist, in der die Kontaktzone der Aluminium-Folie (AF) mit der Kartonschicht (KA) liegt.

13. Kältegerät nach einem der vorhergehenden Ansprüche, **dadurch gekennzeichnet, dass** das Verschalungselement (VT) entlang mindestens einer Soll-Biegelinie (BL2, BL3) quer zu seiner Längserstreckung im planflächig ausgelegten Zustand um etwa 90° derart abgewinkelt ist, dass es ein annäherungsweise L- förmiges Profil aufweist.

14. Kältegerät nach einem der vorhergehenden Ansprüche, **dadurch gekennzeichnet, dass** das Verschalungselement (VT) im Randbereich mindestens einer Außenkante, insbesondere Längskante, eine zu dieser im Querabstand nach innen versetzt verlaufende Soll-Biegelinie (BL1) aufweist, entlang der der Randbereich um etwa 90° zu einem Falzstreifen (FA1) umgelegt ist.

15. Kältegerät nach Anspruch 14, **dadurch gekennzeichnet, dass** das Verschalungselement (VT) entlang dem Falzstreifen (FA1) mit der Innenwand mindestens eines Gehäuseteils (SW), insbesondere einer Längsseitenwand, kontaktiert ist, das außen am Innenbehälters (IB) angebracht ist.

16. Kältegerät nach Anspruch 15, **dadurch gekennzeichnet, dass** das Verschalungselement (VT) entlang seines umgelegten Falzstreifens (FA1) durch mindestens eine Adhäsionsverbindung und/oder mechanische Verbindung mit dem Gehäuseteil (SW) verbunden ist.

## Claims

1. Refrigerating appliance (KG), particularly domestic refrigerating appliance, with at least one inner container (IB) and at least one externally mounted cladding element (VT), between which a cavity (HR) is filled with a thermally insulating insulation material (IN), **characterised in that** the cladding element (VT) is provided along at least one intended bending line (BL1) with a plurality of scorings (RI1 with RIn), which are arranged at predetermined length spacings (SL) from one another in alternation with residual webs (SE1 with SEn-1) of the cladding element (VT), that the cladding element (VT) has at least one cardboard layer (KA), on the inner side of which at least one diffusion blocking layer and on the outer side of which at least one polyethylene film or polyethylene coating (PF) are applied and that the scores are formed merely on the side of the cladding element (VT) remote from the diffusion blocking layer.

2. Refrigerating appliance according to claim 1, **characterised in that** the respective scoring (RI1) is formed to be substantially lineal.

3. Refrigerating appliance according to one of the preceding claims, **characterised in that** the ratio of the number of scorings (RI1 with RIn) to the number of residual webs (SE1 with SEn-1) is so selected that the cladding element (VT) is foldable over substantially stable in shape along the respective intended bending line (BL1).

4. Refrigerating appliance according to any one of the preceding claims, **characterised in that** the ratio of score length (RL) to web length (SL) of the successive scorings (RI1 with RIn) and webs (SE1 with SEn-1) alternating along the respective intended bending line (BL1) is so selected that the cladding element (VT) can be folded over substantially stable in shape along the intended bending line (BL1).

5. Refrigerating appliance according to any one of the preceding claims, **characterised in that** the ratio of score length (RL) to web length (SL) of the successive scores and webs alternating along the intended bending line (BL1) is selected to be between 1 and 6, particularly between 2 and 4.

6. Refrigerating appliance according to any one of the preceding claims, **characterised in that** the score length (RL) of the respective scoring (RI1) is selected to be between 2 and 30 millimetres, particularly between 8 and 16 millimetres.

7. Refrigerating appliance according to any one of the preceding claims, **characterised in that** the web length (SL) of the respective web (SE1) is selected to be between 1 and 10 millimetres, particularly between 1 and 5 millimetres.

8. Refrigerating appliance according to any one of the preceding claims, **characterised in that** the score length (RL) of the respective scoring (RI1) is selected to be greater, particularly four to eight times greater, than the web length (SL) of the respective web (SE1).

9. Refrigerating appliance according to any one of the preceding claims, **characterised in that** the diffusion blocking layer is a diffusion blocking film or coating (AF).

10. Refrigerating appliance according to claim 9, **characterised in that** the cardboard layer (KA) is coated on its inner side, which faces the thermally insulating insulation material (IM), with at least one aluminium film (AF) as diffusion blocking layer.

11. Refrigerating appliance according to one of claims 9 and 10, **characterised in that** the respective scoring (RI1) is so limited in depth that the diffusion blocking layer (AF) of the cardboard layer (KA) is substantially maintained.

12. Refrigerating appliance according to claim 11, **characterised in that** the respective scoring (RI1) is provided from the polyethylene-film-coated outer side of the cardboard layer (KA) at most to a depth (RT) lying in the contact zone of the aluminium film (AF) with the cardboard layer (KA).

13. Refrigerating appliance according to any one of the preceding claims, **characterised in that** the cladding element (VT) is bent over through approximately 90° along at least one intended bending line (BL2, BL3) transversely to the length direction thereof in the flatly formed state in such a manner that it has an approximately L-shaped profile.

14. Refrigerating appliance according to any one of the preceding claims, **characterised in that** the cladding element (VT) has in the edge region of at least one outer edge, particularly longitudinal edge, an intended bending line (BL1), which is offset inwardly relative thereto at a transverse spacing and along which the edge region is folded over approximately 90° to a fold strip (FA1).

15. Refrigerating appliance according to claim 14, **characterised in that** the cladding element (VT) is contacted along the fold strip (FA1) with the inner wall of at least one housing part (SW), particularly a longitudinal side wall, which is mounted externally at the inner container (IB).

16. Refrigerating appliance according to claim 15, **characterised in that** the cladding element (VT) is connected along its folded-over fold strip (FA1) by at least one adhesion connection and/or mechanical connection with the housing part (SW).

## Revendications

1. Appareil frigorifique (KG), en particulier appareil frigorifique ménager, comprenant au moins un récipient interne (IB) et au moins un élément de coffrage (VT) placé à l'extérieur, entre lesquels une cavité (HR) est remplie avec un matériau d'isolation (IN) thermo-isolant, **caractérisé en ce que** l'élément de coffrage (VT) est doté d'au moins une ligne de flexion théorique (BL1) comprenant une pluralité d'éraflures (RI1 avec RIn), qui sont disposées à des intervalles longitudinaux (SL) prédéfinis en alternance avec des traverses restantes (SE1 avec SEn-1) de l'élément de coffrage (VT), **en ce que** l'élément de coffrage (VT) présente au moins une couche de carton (KA), sur le côté intérieur de laquelle est appliquée au moins une couche de blocage de diffusion et sur le côté extérieur de laquelle est appliquée au moins un film de polyéthylène ou un revêtement de polyéthylène (PF), et **en ce que** les éraflures sont placées uniquement sur le côté, opposé à la couche de blocage de diffusion, de l'élément de coffrage (VT).

2. Appareil frigorifique selon la revendication 1, **caractérisé en ce que** l'éraflure concernée (RI1) est conçue sensiblement en forme de ligne.

3. Appareil frigorifique selon l'une des revendications précédentes, **caractérisé en ce que** le rapport entre le nombre d'éraflures (RI1 avec RIn) et le nombre des traverses restantes (SE1 avec SEn-1) est choisi de telle sorte que l'élément de coffrage (VT) peut être replié de façon largement indéformable le long la ligne de flexion prévue (BL1) respective.

4. Appareil frigorifique selon l'une des revendications précédentes, **caractérisé en ce que** le rapport entre la longueur d'éraflure (RL) et la longueur de traverse (SL) des éraflures (RI1 avec RIn) et des traverses (SE1 avec SEn-1) qui se succèdent en alternance le long de la ligne de flexion prévue (BL1) du dispositif, est choisi de telle sorte que l'élément de coffrage (VT) peut être plié de façon largement indéformable le long de l'arête de flexion théorique (BL1).

5. Appareil frigorifique selon l'une des revendications précédentes, **caractérisé en ce que** le rapport entre la longueur d'éraflure (RL) et la longueur de traverse (SL) des éraflures et traverses, qui se succèdent en alternance le long de la ligne de flexion prévue (BL1), est choisi entre 1 et 6, en particulier entre 2 et 4.

6. Appareil frigorifique selon l'une des revendications précédentes, **caractérisé en ce que** la longueur d'éraflure (RL) de l'éraflure respective (RI1) est choisie entre 2 et 30 mm, en particulier entre 8 et 16 mm.

7. Appareil frigorifique selon l'une des revendications précédentes, **caractérisé en ce que** la longueur de traverse (SL) de la traverse (SE1) respective est choisie entre 1 et 10 mm, en particulier entre 1 et 5 mm.

8. Appareil frigorifique selon l'une des revendications précédentes, **caractérisé en ce que** la longueur d'éraflure (RL) de l'éraflure (RI1) respective est supérieure, en particulier 4 à 8 fois supérieure, à la longueur (SL) de la traverse (SE1) respective.

9. Appareil frigorifique selon l'une des revendications précédentes, **caractérisé en ce que** la couche de blocage de diffusion est un film ou revêtement de blocage de diffusion (AF).

10. Appareil frigorifique selon la revendication 9, **caractérisé en ce que** la couche de carton (KA) est revêtue sur son côté intérieur, tourné vers le matériau d'isolation (IM) thermo-isolant, d'au moins un film aluminium (AF) comme couche de blocage de diffusion.

11. Appareil frigorifique selon l'une des revendications 9 ou 10, **caractérisé en ce que** l'éraflure (RI1) respective est limitée en profondeur, de telle sorte que la couche de blocage de diffusion (AF) de la couche de carton (KA) est largement conservée.

12. Appareil frigorifique selon la revendication 11, **caractérisé en ce que** l'éraflure (RI1) respective est prévue du côté extérieur, revêtu de film de polyéthylène, de la couche de carton (KA) au maximum jusqu'à une profondeur (RT) dans laquelle se situe la zone de contact du film d'aluminium (AF) avec la couche de carton (KA).

13. Appareil frigorifique selon l'une des revendications précédentes, **caractérisé en ce que** l'élément de coffrage (VT) est coudé le long d'au moins une ligne de flexion prévue (BL2, BL3) d'environ 90° transversalement à son extension longitudinale dans l'état conçu à plat de telle sorte qu'il présente un profil approximativement en forme de L.

14. Appareil frigorifique selon l'une des revendications précédentes, **caractérisé en ce que** l'élément de coffrage (VT) présente dans la zone de bord d'au moins une arête extérieure en particulier d'une arête longitudinale, une ligne de flexion théorique (BL1) agencée de façon décalée par rapport à l'arête vers l'intérieur dans l'espacement transversal, ligne le long de laquelle la zone de bord est repliée d'environ 90° par rapport à une bande de pliage (FA1).

15. Appareil frigorifique selon la revendication 14, **caractérisé en ce que** l'élément de coffrage (VT) est mis en contact le long de la bande de pliage (FA1) avec la paroi interne d'au moins une partie de boîtier (SW), en particulier une paroi latérale longitudinale, qui est placée à l'extérieur sur le récipient interne (IB).

16. Appareil frigorifique selon la revendication 15, **caractérisé en ce que** l'élément de coffrage (VT) est relié le long de sa bande de pliage (FA1) repliée par au moins une liaison d'adhésion et/ou une liaison mécanique à la partie de boîtier (SW).
